# EUROPEAN PATENT SPECIFICATION

(11) **EP 1 939 061 B1**
(45) Date of publication and mention of the grant of the patent: **03.11.2010**
(21) Application number: 06425865.0
(22) Date of filing: 28.12.2006
(51) Int. Cl.: B60W 50/08, B60Q 1/00

(54) **A tactile signaling arrangement for warning the driver of a vehicle, as well as a vehicle steering device and driving assistance system including such an arrangement**
Tastsignalanordnung zum Warnen des Fahrers eines Fahrzeugs sowie eine Lenkvorrichtung für ein Fahrzeug und ein Fahrerassistenzsystem mit einer solchen Anordnung
Agencement de signalisation tactile pour avertir le conducteur d'un véhicule, ainsi qu'un dispositif de contrôle de direction d'un véhicule et système d'assistance à la conduite selon cet agencement

(43) Date of publication of application: 02.07.2008
(73) Proprietor: Magneti Marelli S.p.A., 20011 Corbetta (MI) (IT)
(72) Inventor: Ghisio, Guido, 10078 Venaria Reale (Torino) (IT)
(74) Representative: Deambrogi, Edgardo

(56) References cited:
- EP-A- 0 856 432
- EP-A1- 1 502 835
- EP-A2- 0 958 965
- DE-C1- 10 211 946
- GB-A- 2 426 316
- US-A1- 2003 142 835
- US-A1- 2003 197 601

## Description

The present invention relates to vehicle driving assistance systems and, in particular, to systems for providing driving assistance in relation to the "lateral" movements performed by the vehicle, for assistance in keeping within a driving lane or in changing lanes and, more specifically, to a haptic signalling arrangement as well as to a steering device and a driving assistance system including such an arrangement.

In recent years, the progress that has been achieved in the field of passive safety and the equipping of vehicles with active safety systems has contributed to a considerable improvement in road safety.

In order further to reduce dangerous situations and to achieve greater driving comfort, driving assistance systems are under development which can assist the driver in manoeuvres and in any critical driving situation that may arise on the road, preventing possible risky situations.

Lateral control of the vehicle is amongst the preventive safety functions that are governed by such systems; this involves the control of the vehicle with respect to any departure from the lane in which it is travelling or, if the driver wishes to "depart" from that lane, assistance in that operation by checking for any vehicles arriving in the destination lane.

Such systems are arranged to inform the driver of the need to adjust his path of movement with the use of various information channels such as visual indications, acoustic signalling, and tactile or "haptic" signalling.

For example, in a system for keeping the vehicle in the driving lane (known as a "Lane Departure Warning"), it is arranged that the crossing or imminent crossing of the lines demarcating the driving lane will be signalled if the crossing is not intentional, that is, if the change of lane has not been indicated beforehand by operation of the appropriate direction indicator; the signalling is performed by acoustic means or by providing the driver with a tactile sensation (haptic feedback) in terms of vibration in the steering wheel or in terms of torque in the steering wheel which produces a sensation of resistance to crossing of the lane-demarcation lines and "suggests" the appropriate steering action to be undertaken in order to return the vehicle to the lane or to keep it within the lane.

In a system for supporting the lane-changing manoeuvre, for example, for assistance during overtaking, sensors are provided for scanning the area beside and behind the vehicle ("Blind Spot Monitoring") in order to identify other vehicles arriving in the destination lane and to reduce the risk of collisions. In this case, the signalling is typically entrusted to visual interfaces such as LEDs positioned on the rear-view mirrors, and/or to acoustic signals, but haptic feedback to the steering wheel such as signalling by means of vibrations or the generation of a resisting torque which opposes the risky manoeuvre may also be considered, as in a Lane Departure Warning system.

With the spread of such driving assistance and other systems, a need has arisen to operate with specific warning signals which are effective, that is, which can indicate quickly and unambiguously a specific state (of the environment, of the vehicle, or of the driver), which are differentiated from the numerous conventional acoustic and visual signals in order to prevent driver confusion and disorientation due to the multiplicity of signals (which may even be simultaneous), and which are selective in order to supply information to the vehicle driver but not to the passengers.

Tactile signals represent the best comprise solution in this sense since they are naturally perceptible, do not require particular attention to visual elements in a specific direction and do not disturb the passengers who are present.

Signalling by means of vibrations can be supplied through parts of the vehicle with which the driver is in contact in the course of an incorrect or dangerous manoeuvre, for example, the accelerator pedal in speed control, or through parts with which the driver is (or should be) constantly in contact, for example, the seat or the steering wheel, for any other type of signalling.

In most cases, because of the uncomfortable and inconvenient sensation caused by vibration of the seat, together with the risk that it may barely be perceived or may be perceived as being due to road conditions and therefore ignored, it is preferable to implement the signalling by vibration of the steering wheel or of a similar steering device with which the vehicle is provided. The steering device is in fact a part of the vehicle with which the driver is constantly in contact for driving purposes, and which he grips with his hands which are the part of the human body that has the greatest tactile sensitivity.

There are various known methods of producing a vibration in the steering wheel; amongst these, the main methods involve the application of "circumferential" vibrations by the generation of torques applied to the steering column, of axial vibrations produced by the movement of a striker member acting along the steering column, of transverse vibrations produced by the movement of rotating eccentric masses fitted in the steering-wheel structure, or even of radial vibrations produced by pulsations generated by the pumping of fluids in its circular grip.

For instance, GB 2 426 316 discloses a steering wheel having a moveable element adapted to provide a tactile alert signal to the driver by altering the dimensions of at least a section of the rim of the steering wheel.

EP 0 958 965 describes a solution for the generation of localized vibration in which a pair of magnetic vibration actuators is incorporated in the circular grip or rim of the steering wheel in opposed gripping positions which are generally held by a driver when driving, particularly in steering wheels that carry, on diametrally opposed horizontal spokes, controls for operating on-board apparatus or instruments.

The vibration is caused by the selective excitation of two solenoids which set in motion corresponding striker members acting on respective resilient members incorporated in two diametrally opposed positions on the steering-wheel rim. In the application envisaged, the tactile signalling is used to supply feedback relating to the operation of the controls on the steering wheel and, in a selective mode of activation of the solenoids, it is possible to recognize different signals according to the portion of the steering wheel which is caused to vibrate.

Disadvantageously, as well as causing the vibration to spread throughout the structure, limiting the efficacy of the selectivity of the signalling, the integration of the vibrating members in the intimate structure of the steering wheel also makes it impossible to post-fit this signalling capability in vehicles that are already on the road except by replacing the entire steering wheel which is a laborious and expensive procedure particularly for those steering wheels which carry controls for some on-board devices.

EP 0 856 432 discloses a touch indicating device for a vehicle comprising a pair of piezoelectric actuating elements located into a steering wheel and adapted to generate mechanical vibrations in the steering wheel plane, so as to supply touch signals for driver-assist purposes or alert of vehicle operating conditions. As in EP 0 958 965 the integration of the vibrating members in the intimate structure of the steering wheel makes it impossible to post-fit this device in a vehicle after production except by replacing the entire steering wheel.

US 2003/0197601, considered as the losest prior art, discloses a collision preventing device for vehicle including a pair of vibrators secured to the steering wheel, each vibrator being of the type having a decentered heavy weight secured to a rotary shaft of a rotary motor, or having a heavy weight secured to a drive shaft of a solenoid, or the like. The vibrators are mounted to predetermined locations of the steering wheel either directly or through a diaphragm, so that a driver can be reliably warned by exerted force on the steering wheel with which the driver contacts when driving.

The object of the present invention is to provide a tactile signalling arrangement for warning the driver of a vehicle within a driving assistance system, which can be associated with a vehicle steering device, and which enables an effective and selective tactile signalling indicative of an anomalous driving condition to be transmitted to the vehicle driver.

A further object of the invention is to provide a signalling arrangement which is easy to install in a vehicle not only during production but also as an after-market accessory for vehicles that are already on the road, without the replacement of parts, and which offers the driver an easily perceptible, logical and natural communication interface.

According to the present invention, these objects are achieved by means of a signalling arrangement having the characteristics specified in Claim 1.

Further subjects of the invention are a vehicle steering device and a vehicle driving assistance system including such an arrangement, as claimed.

Specific embodiments of the invention form the subjects of the dependent claims.

US 2004 / 104 887 A1 discloses a haptic interface device, and more particularly relates to an apparatus for indicating conditions of the vehicle or circumstances outside the vehicle to an operator, such as the driver, by providing haptic sensations. The apparatus may be mounted in the vehicle by attaching an operating member to the steering wheel of the vehicle.

In summary, the present invention is based on the principle of the association of a pair of vibrating members with a steering device, typically a steering wheel; the vibrating members may be fitted on the steering-wheel structure externally in the positions in which it is gripped by the driver. Each vibrating member is constituted by a pair of opposed plates one of which is movable relative to the other by electromagnetically-induced attraction/repulsion.

A control circuit for the generation of electromagnetic attraction and/or repulsion fields enables different vibration modes to be achieved in order to convey to the driver information with variable content relating to current driving conditions, within a driving assistance system for the lateral control of the vehicle.

Further characteristics and advantages of the invention will be explained in further detail in the following specific description which is given by way of non-limiting example with reference to the appended drawings, in which:
Figures 1a and 1b are front and rear schematic views, respectively, of a steering wheel equipped with the signalling arrangement of the invention, and
Figure 2 is a cross-section exemplary view of the structure of the signalling arrangement of the invention.

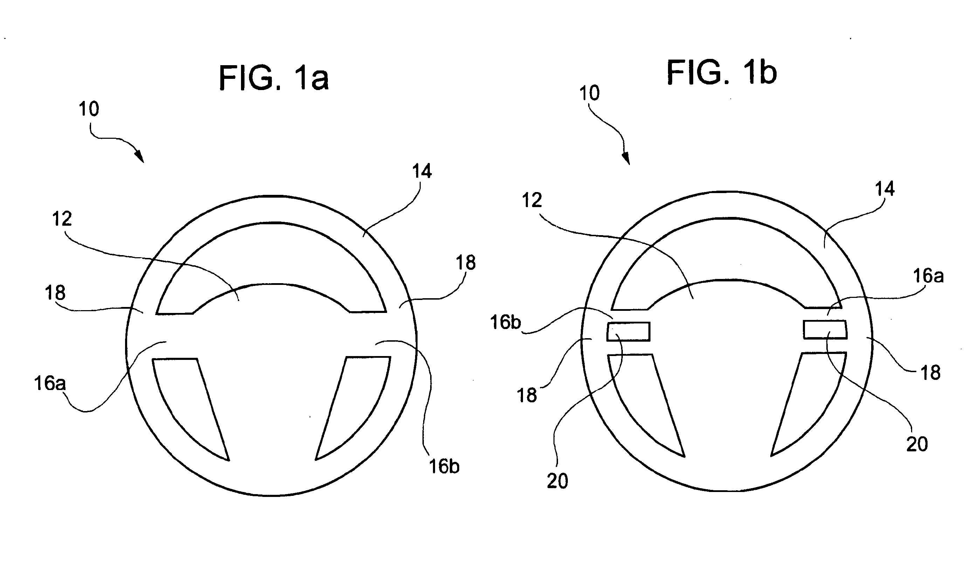

Figures 1a and 1b show a vehicle steering wheel 10 comprising a central hub 12 and a circular gripping rim 14 joined to the hub by means of connecting spokes including at least a pair of diametrally-opposed horizontal spokes indicated 16a and 16b.

The spokes 16a and 16b may incorporate controls for on-board devices and, in accordance with ergonomic principles, their arrangement is substantially horizontal to permit easy operation of the controls by the driver without the need to release his grip on the steering wheel which - in the most frequent driving conditions and in accordance with correct driving recommendations - is such that the hands are aligned horizontally in diametrally opposed positions so as to grip the rim portions indicated 18 in the drawings.

A tactile (or haptic) signalling arrangement of the invention includes a pair of tactile signalling devices which are individually indicated 20 and are fitted on the rear of the spokes 16a, 16b proximate to the rim 14 so that they are within the reach of the driver's fingers in the position in which the steering wheel is frequently (correctly) gripped, that is, in the gripping position which is generally maintained by a driver when driving, particularly with steering wheels that carry, on the horizontal spokes, controls for operating on-board apparatus and instruments.

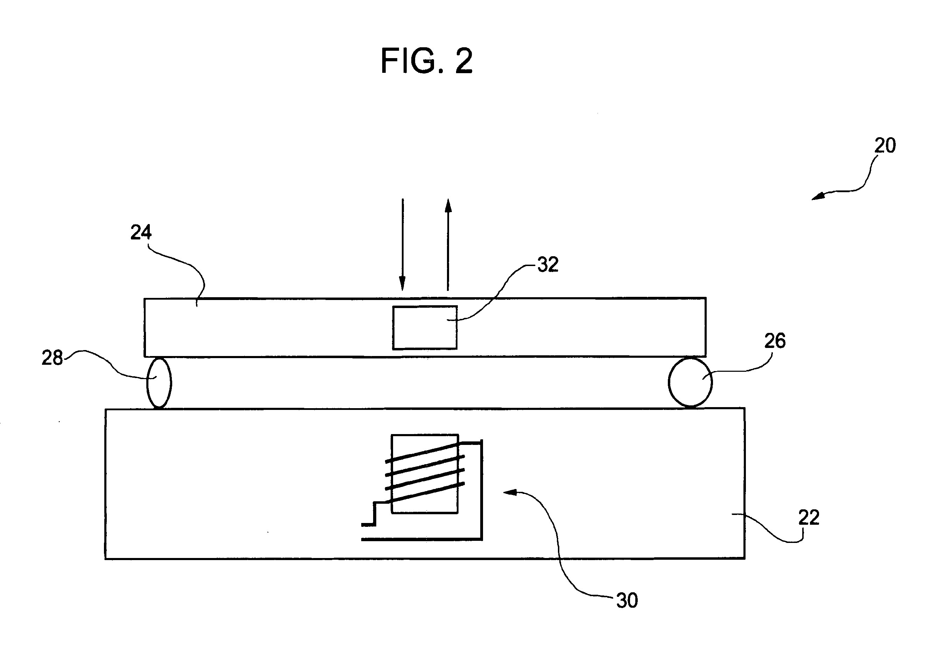

The structure of each signalling device 20 is shown in greater detail in Figure 2 and is described below.

Each signalling device 20 comprises a pair of elements, that is, a baseplate 22 arranged to be fixed firmly to a spoke of the steering wheel, and an oscillating plate 24 disposed opposite the baseplate and joined thereto by means of a hinge element 26 adapted to permit a limited oscillation of the plate relative to a rest position in which the two elements are substantially parallel.

Advantageously, on the side remote from the hinge, there is a resilient stop element 28 for preventing contact and adhesion between the plate 24 and the baseplate 22 in the operative condition in which the oscillating plate moves alternately towards/away from the baseplate.

An electromagnetic device 30 for inducing a magnetic field, for example, a solenoid, is incorporated in the structure of the baseplate 22, together with a respective excitation circuit and a supply of electrical energy (not shown).

A metal insert 32 sensitive to a magnetic field is possibly incorporated in the oscillating plate 24 if that plate is not itself made of a magnetic material.

The signalling devices 20 are adapted to adopt a rest condition indicative of a correct or safe driving condition, in which the plate 24 is substantially immobile, and a signalling condition indicative of a warning of danger or of an incorrect driving manoeuvre, in which the plate 24 oscillates (vibrates) about the rest position to signal to the driver an anomalous driving condition for which a manoeuvre or the operation of a control system of the vehicle is required.

In practice, the tactile signalling devices combine to provide "haptic" feedback in the steering wheel, which represents the most intuitive driver/vehicle interface device for constantly providing information to the driver regarding the environment surrounding the vehicle, in order to indicate anomalous driving conditions or to prevent incorrect or dangerous manoeuvres; otherwise the signalling devices remain deactivated.

In a driving assistance system, for example, a system for assistance in keeping within a driving lane or changing lanes, an on-board processing and control unit is arranged to recognize a vehicle driving scenario, in accordance with known techniques which do not form a subject of the present invention and are therefore not discussed in greater depth herein, and to assess the current driving condition (the driving condition or an incorrect manoeuvre).

The management of the signalling strategies and of the electronic control of the signalling devices 20 resides in the processing and control unit or in any other on-board unit which has access to the control unit by means of a data network (for example, CAN).

The signalling devices receive their activation signals from the control unit by direct connection (dedicated wiring) or via radio.

As a result of the recognition of an anomalous or potentially risky driving condition, the on-board processing and control unit is arranged to activate the tactile signalling devices 20 by controlling their excitation circuits.

In the preferred embodiment, the excitation signal of the electromagnetic device 30 is of the pulsed type and produces a vibration of the plate 24 relative to the baseplate 22 by attraction (or alternatively repulsion) of the plate during the pulse period and subsequent return towards the rest condition by inertia during the non-excitation period, as indicated by the arrows in the drawing.

Complete adhesion of the plate and the baseplate owing to excessive attraction is prevented by a resilient reaction force produced by the response of the material constituting the stop element 28 or by a magnetic repulsion force produced by the solenoid by inversion of the magnetic field induced, which can be achieved by suitable control of the excitation circuit.

The information conveyed to the driver by the vibrations may differ in terms of content and the modes of vibration may differ.

The modes of vibration of each signalling device 20 may differ with respect to the vibration frequency or the vibration amplitude. Advantageously, a greater vibration frequency or amplitude may be associated with an anomalous driving condition that is assessed as more dangerous, or with a more imminent danger.

Advantageously, only one of the signalling devices 20 may be activated to provide to the driver not only the signalling relating to the anomalous driving condition, but also an indication of the side of the vehicle on which the danger is present, for example, the side towards which the vehicle is deviating, or an indication of the side of the vehicle towards which a correction, for example, a steering manoeuvre, is required.

Further information may be transmitted by controlling the vibration modes of both of the devices in phase.

Advantageously, the fitting of the devices on the rear of the steering wheel does not interfere with incorporated safety devices such as an air-bag or any controls for on -board devices.

The structure of the arrangement permits the after-market fitting thereof without the need for modification of the structure of a pre-existing steering wheel, which could lead to a degradation of its reliability.

Moreover, with the arrangement of the invention, purely localized vibration of each individual device, or rather of the oscillating plate of each device, is noticeable when the driver's hands are in contact therewith and there is no widespread vibration of the steering-wheel structure which could erroneously be interpreted as being due to road conditions and therefore ignored.

The signalling arrangement of the invention is advantageously particularly suitable for tactile feedback applications in alerting/danger warning systems within the sphere of lateral vehicle control since its location on the steering wheel is suited to the position of a driver's hands in "cruising" attitude but, during complex, low-speed manoeuvres, is remote from the hand positions so that the irritating perception of possible false alarms is reduced.

The system is advantageously arranged to implement a Lane Departure Warning (LDW) type of control strategy, that is, to warn the driver of an anomalous or potentially risky driving condition when it recognizes a deviation of the vehicle relative to the demarcation lines of the road lane along which the vehicle is travelling and no activation of the direction indicators is detected so that the system interprets any departure from the lane travelled as unintentional.

It may also be arranged to implement a Lane Change Support (LCS) control strategy, that is, to assist the driver in a lane-changing manoeuvre, for example, in order to overtake, and to warn him of an anomalous or potentially risky driving condition. This occurs when no deviation of the vehicle relative to the demarcation lines of the lane along which it is travelling is recognized, in order to assist the driver in the decision to perform an overtaking manoeuvre or, in the event of a deviation of the vehicle which is signalled by means of the direction indicators and is therefore intentional, to assist the driver in initiating the overtaking manoeuvre.

The scope of protection of the present invention is defined by the embodiments of the appended claims.

## Claims

1. A tactile signalling arrangement for communicating an anomalous driving condition to the driver of a vehicle, adapted to be associated with a steering wheel device (10) of the vehicle comprising at least a pair of gripping portions (18) for the driver's hands, including at least a pair of tactile signalling devices (20) having a vibrating element (24), wherein each signalling device (20) is fitted on the rear surface of the steering wheel device within the reach of the driver's fingers and comprises a base (22) which can be connected firmly to the steering wheel device (10) proximate to a gripping portion (18) thereof,
**characterised in that** each signalling device (20) comprises a vibrating plate element (24) fitted externally on the steering device for contact by the driver's hands, facing the base (22) and movable relative thereto orthogonally to the general plane of the steering wheel device as a result of electromagnetically-induced attraction or repulsion, the vibrating plate element (24) being connected to said base (22) by a hinge element (26) along one side thereof.

2. An arrangement according to Claim 1, in which the vibrating plate element (24) is arranged parallel to the base (22) in a rest position in which it is stationary relative to the base (22).

3. An arrangement according to Claim 1 or Claim 2, in which the vibrating plate element (24) is adapted to adopt an oscillatory motion relative to the base (22) owing to electromagnetic attraction towards the base (22) and resilient return towards the rest position.

4. An arrangement according to Claim 1 or Claim 2, in which the vibrating plate element (24) is adapted to adopt an oscillatory motion relative to the base (22) owing to electromagnetic repulsion from the base (22) and resilient return towards the rest position.

5. An arrangement according to Claim 1 or Claim 2, in which the vibrating plate element (24) is adapted to adopt an oscillatory motion relative to the base (22) as a result of alternate electromagnetic attraction and repulsion relative to the base (22).

6. An arrangement according to any one of the preceding claims, in which the base (22) has, on its face that faces towards the vibrating plate element (24), a resilient stop element (28) for preventing direct contact between the plate element (24) and the base (22).

7. An arrangement according to any one of the preceding claims, in which the base (22) includes a device (30) for inducing a magnetic field.

8. An arrangement according to Claim 7, in which the device (30) for inducing a magnetic field comprises a solenoid.

9. An arrangement according to Claim 7 or Claim 8, in which the vibrating plate element (24) is made of material that is sensitive to the magnetic field.

10. An arrangement according to Claim 7 or Claim 8, in which the vibrating plate element (24) includes an insert (32) of material that is sensitive to the magnetic field.

11. An arrangement according to Claim 7, in which the base (22) includes an electrical circuit for the excitation of the device (30) for inducing a magnetic field.

12. An arrangement according to Claim 11, in which each signalling device (20) comprises a respective excitation circuit arranged for receiving driving commands from means for assessing anomalous driving conditions of the vehicle, and for generating a signal for the excitation of the device (30) for inducing a magnetic field.

13. An arrangement according to Claim 12, in which the excitation circuit is arranged to generate an excitation signal comprising a train of pulses the frequency of which is variable according to the driving condition assessed.

14. An arrangement according to Claim 12, in which the excitation circuit is arranged to generate an excitation signal comprising a train of pulses the amplitude of which is variable according to the driving condition assessed.

15. An arrangement according to Claim 12, in which each signalling device (20) comprises a respective excitation circuit which is arranged to receive driving commands independently of other signalling devices (20) so as to present to the driver an anomalous driving condition signalling indicative of the side of the vehicle on which the condition is detected, or of the side of the vehicle towards which a correction is required.

16. An arrangement according to Claim 12, in which the signalling devices (20) comprise synchronized excitation circuits which are arranged to generate respective excitation signals comprising trains of pulses that are in phase.

17. A vehicle steering device (10), including at least a pair of gripping portions (18) for the vehicle driver's hands, **characterized in that** it comprises a signalling arrangement according to Claims 1 to 16.

18. A steering device (10) according to Claim 17, comprising a gripping rim (14) joined to a central hub (12) by means of at least a pair of horizontal connecting spokes (16a, 16b) each carrying a respective device (20) of the signalling arrangement.

19. A vehicle driving assistance system in particular for assistance in keeping within a driving lane or in changing lanes, including:
- means for detecting the environment surrounding the vehicle,
- electronic processing and control means arranged to assess the current driving condition on the basis of information relating to the vehicle driving scenario acquired by the detecting means, and
- a signalling arrangement according to Claims 1 to 16, adapted to be controlled by the processing and control means in order to signal to the driver an anomalous driving condition for which a manoeuvre or the operation of a control system of the vehicle is required.

## Patentansprüche

1. Eine Tastsignalanordnung zum Benachrichtigen des Fahrers eines Fahrzeugs von einer ungewöhnlichen Fahrbedingung, angepasst für das Verbinden mit einer Lenkradvorrichtung (10) des Fahrzeugs, aufweisend mindestens ein Paar Greifteile (18) für die Hände des Fahrers, mit mindestens einem Paar Tastsignalvorrichtungen (20), die ein Vibrationselement (24) besitzen, bei der jede Signalvorrichtung (20) auf der hinteren Oberfläche der Lenkradvorrichtung in Reichweite der Finger des Fahrers angebracht ist und eine Basis (22) aufweist, die mit der Lenkradvorrichtung (10) in der Nähe eines Greifteils (18) davon fest verbunden werden kann,
**dadurch gekennzeichnet, dass** jede Signalvorrichtung (20) ein vibrierendes Plattenelement (24) aufweist, das außen an der Lenkvorrichtung zur Berührung durch die Hände des Fahrers angebracht, der Basis (22) zugewandt und in Bezug auf sie rechtwinklig zur allgemeinen Ebene der Lenkradvorrichtung als Folge einer elektromagnetisch induzierten Anziehung oder Abstoßung beweglich ist, wobei das vibrierende Plattenelement (24) mit der Basis (22) durch ein Schwenkelement (26) entlang einer Seite davon verbunden ist.

2. Anordnung gemäß Anspruch 1, bei der das vibrierende Plattenelement (24) parallel zur Basis (22) in einer Ruhestellung, in der es relativ zur Basis (22) unbeweglich ist, angeordnet ist.

3. Anordnung gemäß Anspruch 1 oder Anspruch 2, bei der das vibrierende Plattenelement (24) angepasst ist, relativ zur Basis (22) eine oszillierende Bewegung aufgrund einer elektromagnetischen Anziehung zur Basis (22) und einer federnden Rückkehr in Richtung der Ruhestellung auszuführen.

4. Anordnung gemäß Anspruch 1 oder Anspruch 2, bei der das vibrierende Plattenelement (24) angepasst ist, relativ zur Basis (22) eine oszillierende Bewegung aufgrund einer elektromagnetischen Abstoßung von der Basis (22) und einer federnden Rückkehr in Richtung der Ruhestellung auszuführen.

5. Anordnung gemäß Anspruch 1 oder Anspruch 2, bei der das vibrierende Plattenelement (24) angepasst ist, relativ zur Basis (22) eine oszillierende Bewegung als Folge einer abwechselnden elektromagnetischen Anziehung und Abstoßung relativ zur Basis (22) auszuführen.

6. Anordnung gemäß irgendeinem der vorangegangenen Ansprüche, bei der die Basis (22) auf ihrer Seite, die dem vibrierenden Plattenelement (24) zugewandt ist, ein federndes Stoppelement (28) aufweist, um einen direkten Kontakt zwischen dem Plattenelement (24) und der Basis (22) zu verhindern.

7. Anordnung gemäß irgendeinem der vorangegangenen Ansprüche, bei der die Basis (22) eine Vorrichtung (30) zum Induzieren eines Magnetfeldes besitzt.

8. Anordnung gemäß Anspruch 7, bei der die Vorrichtung (30) zum Induzieren eines Magnetfeldes einen Elektromagnet aufweist.

9. Anordnung gemäß Anspruch 7 oder Anspruch 8, bei der das vibrierende Plattenelement (24) aus einem Material hergestellt ist, das auf das Magnetfeld empfindlich ist.

10. Anordnung gemäß Anspruch 7 oder Anspruch 8, bei der das vibrierende Plattenelement (24) einen Einsatz (32) aus einem Material besitzt, das auf das Magnetfeld empfindlich ist.

11. Anordnung gemäß Anspruch 7, bei der die Basis (22) einen elektrischen Kreis für die Erregung der Vorrichtung (30) zum Induzieren eines Magnetfeldes besitzt.

12. Anordnung gemäß Anspruch 11, bei der jede Signalvorrichtung (20) einen entsprechenden Erregungskreis aufweist, der angeordnet ist, um Fahrkommandos von Einrichtungen zum Bewerten ungewöhnlicher Fahrbedingungen des Fahrzeugs zu empfangen und um ein Signal für die Erregung der Vorrichtung (30) zum Induzieren eines Magnetfeldes zu erzeugen.

13. Anordnung gemäß Anspruch 12, bei welcher der Erregungskreis angeordnet ist, um ein Erregungssignal zu erzeugen, das eine Folge von Impulsen aufweist, deren Frequenz entsprechend der bewerteten Fahrbedingung veränderlich ist.

14. Anordnung gemäß Anspruch 12, bei welcher der Erregungskreis angeordnet ist, um ein Erregungssignal zu erzeugen, das eine Folge von Impulsen aufweist, deren Amplitude entsprechend der bewerteten Fahrbedingung veränderlich ist.

15. Anordnung gemäß Anspruch 12, bei der jede Signalvorrichtung (20) einen entsprechenden Erregungskreis aufweist, der angeordnet ist, um unabhängig von anderen Signalvorrichtungen (20) Fahrkommandos zu empfangen, um dem Fahrer ein Signal einer ungewöhnlichen Fahrbedingung zu präsentieren, das auf die Seite des Fahrzeugs, auf der die Bedingung festgestellt worden ist, oder die Seite des Fahrzeugs, in deren Richtung eine Korrektur erforderlich ist, hinweist.

16. Anordnung gemäß Anspruch 12, bei der die Signalvorrichtungen (20) synchronisierte Erregungskreise aufweisen, die angeordnet sind, um entsprechende Erregungssignale zu erzeugen, die Folgen von Impulsen im Gleichtakt aufweisen.

17. Eine Fahrzeuglenkvorrichtung (10), mindestens eine Paar Greifteile (18) für die Hände des Fahrzeuglenkers besitzend, **dadurch gekennzeichnet, dass** sie eine Signalanordnung gemäß den Ansprüchen 1 bis 16 aufweist.

18. Lenkvorrichtung (10) gemäß Anspruch 17, einen Greifkranz (14) aufweisend, der über mindestens ein Paar horizontaler Verbindungsspeichen (16a, 16b), von denen jede eine entsprechende Vorrichtung (20) der Signalanordnung trägt, mit einer zentralen Nabe (12) verbunden ist.

19. Ein Fahrassistenzsystem für ein Fahrzeug, besonders zur Unterstützung beim Einhalten einer Fahrspur oder beim Wechseln von Fahrspuren, mit:
Einrichtungen zum Erkennen der Umgebung des Fahrzeugs,
Einrichtungen zur elektronischen Verarbeitung und Steuerung, die angeordnet sind, um auf der Basis von Informationen über das von den Erkennungseinrichtungen erfasste Fahrszenario des Fahrzeugs die aktuelle Fahrbedingung zu bewerten, und
einer Signalanordnung gemäß den Ansprüchen 1 bis 16, die angepasst ist, durch die Verarbeitungs- und Steuerungseinrichtungen gesteuert zu werden, um dem Fahrer eine ungewöhnliche Fahrbedingung zu signalisieren, für die ein Manöver oder die Betätigung eines Steuerungssystems des Fahrzeugs erforderlich ist.

## Revendications

1. Agencement de signalisation tactile pour communiquer une condition de conduite anormale au conducteur d'un véhicule, adapté pour être associé à un dispositif formant volant de direction (10) du véhicule, comprenant au moins une paire de portions de préhension (18) pour les mains du conducteur, incluant au moins une paire de dispositifs de signalisation tactile (20) ayant un élément vibrant (24), tandis que chaque dispositif de signalisation (20) est monté sur la surface postérieure du dispositif formant volant de direction à portée des doigts du conducteur et comprend une base (22) qui peut être reliée fermement au dispositif formant volant de direction (10) à proximité d'une portion de préhension (18) de celui-ci,
**caractérisé en ce que** chaque dispositif de signalisation (20) comprend un élément formant plaque vibrante (24) monté de manière externe sur le dispositif de contrôle de direction de manière à pouvoir être touché par les mains du conducteur, situé en vis-à-vis de la base (22) et déplaçable par rapport à celle-ci orthogonalement au plan général du dispositif formant volant de direction à la suite d'une attraction ou d'une répulsion induite par voie électromagnétique, l'élément formant plaque vibrante (24) étant relié à ladite base (22) par un élément formant charnière (26) le long d'un côté de celle-ci.

2. Agencement selon la revendication 1, dans lequel l'élément formant plaque vibrante (24) est disposé parallèlement à la base (22) dans une position de repos dans laquelle il est stationnaire par rapport à la base (22).

3. Agencement selon la revendication 1 ou la revendication 2, dans lequel l'élément formant plaque vibrante (24) est adapté pour adopter un mouvement oscillatoire par rapport à la base (22) par suite d'une attraction électromagnétique vers la base (22) et du retour résilient vers la position de repos.

4. Agencement selon la revendication 1 ou la revendication 2, dans lequel l'élément formant plaque vibrante (24) est adapté pour adopter un mouvement oscillatoire par rapport à la base (22) par suite d'une répulsion électromagnétique vers la base (22) et du retour résilient vers la position de repos.

5. Agencement selon la revendication 1 ou la revendication 2, dans lequel l'élément formant plaque vibrante (24) est adapté pour adopter un mouvement oscillatoire par rapport à la base (22) sous l'effet d'une attraction et d'une répulsion électromagnétiques alternées par rapport à la base (22).

6. Agencement selon l'une quelconque des revendications précédentes, dans lequel la base (22) a, sur sa face qui est tournée vers l'élément formant plaque vibrante (24), un élément d'arrêt résilient (28) pour empêcher le contact direct entre l'élément formant plaque (24) et la base (22).

7. Agencement selon l'une quelconque des revendications précédentes, dans lequel la base (22) comprend un dispositif (30) pour l'induction d'un champ magnétique.

8. Agencement selon la revendication 7, dans lequel le dispositif (30) pour l'induction d'un champ magnétique comprend un solénoïde.

9. Agencement selon la revendication 7 ou la revendication 8, dans lequel l'élément formant plaque vibrante (24) est réalisé en un matériau qui est sensible au champ magnétique.

10. Agencement selon la revendication 7 ou la revendication 8, dans lequel l'élément formant plaque vibrante (24) comprend un insert (32) en matériau qui est sensible au champ magnétique.

11. Agencement selon la revendication 7, dans lequel la base (22) comprend un circuit électrique pour l'excitation du dispositif (30) pour induire un champ magnétique.

12. Agencement selon la revendication 11, dans lequel chaque dispositif de signalisation (20) comprend un circuit d'excitation respectif agencé pour recevoir des commandes de conduite provenant de moyens pour la détermination de conditions de conduite anormales du véhicule, et pour générer un signal pour l'excitation du dispositif (30) pour l'induction d'un champ magnétique.

13. Agencement selon la revendication 12, dans lequel le circuit d'excitation est agencé pour générer un signal d'excitation comprenant un train d'impulsions dont la fréquence est variable en fonction de la condition de conduite déterminée.

14. Agencement selon la revendication 12, dans lequel le circuit d'excitation est agencé pour générer un signal d'excitation comprenant un train d'impulsions dont l'amplitude est variable en fonction de la condition de conduite déterminée.

15. Agencement selon la revendication 12, dans lequel chaque dispositif de signalisation (20) comprend un circuit d'excitation respectif qui est agencé pour recevoir des commandes de conduite indépendamment des autres dispositifs de signalisation (20) de manière à présenter au conducteur une signalisation de condition de conduite anormale, indiquant le côté du véhicule sur lequel la condition est détectée, ou le côté du véhicule vers lequel une correction est requise.

16. Agencement selon la revendication 12, dans lequel les dispositifs de signalisation (20) comprennent des circuits d'excitation synchronisés qui sont agencés pour générer des signaux d'excitation respectifs comprenant des trains d'impulsions qui sont en phase.

17. Dispositif de contrôle de direction d'un véhicule (10), incluant au moins une paire de portions de préhension (18) pour les mains du conducteur du véhicule, **caractérisé en ce qu'**il comprend un agencement de signalisation selon les revendications 1 à 16.

18. Dispositif de contrôle de direction (10) selon la revendication 17, comprenant une couronne de préhension (14) reliée à un moyeu central (12) au moyen d'au moins une paire de bras de liaison horizontaux (16a, 16b) portant chacun un dispositif respectif (20) de l'agencement de signalisation.

19. Système pour l'assistance à la conduite d'un véhicule, en particulier pour l'assistance au maintien dans une file de conduite ou au changement de file, comprenant:
- des moyens pour la détection de l'environnement entourant le véhicule,
- des moyens électroniques de traitement et de commande agencés pour déterminer la condition de conduite effective sur la base d'informations concernant le scénario de conduite du véhicule acquis par les moyens de détection, et
- un agencement de signalisation selon les revendications 1 à 16, adapté pour être commandé par les moyens de traitement et de commande afin de signaler au conducteur une condition de conduite anormale pour laquelle une manoeuvre ou la mise en fonctionnement d'un système de commande du véhicule est requise.
